# EUROPÄISCHE PATENTANMELDUNG

(11) **EP 4 682 022 A1**
(43) Veröffentlichungstag der Anmeldung: **21.01.2026**
(21) Anmeldenummer: 25189363.2
(22) Anmeldetag: 14.07.2025
(51) Int. Cl.: B62D 5/00

(54) **LENKSÄULE FÜR EIN KRAFTFAHRZEUG**

(30) Priorität: 18.07.2024 BE 202405470
(71) Anmelder: thyssenkrupp Presta Aktiengesellschaft, 9492 Eschen (LI); thyssenkrupp AG, 45143 Essen (DE)
(72) Erfinder: Bondia Huerta, David, 9470 Buchs SG (CH); Heitz, Thomas Werner, 9493 Mauren (LI); Melsa, Philip, 6850 Dornbirn (AT); Schwarzhans, Paul, 6800 Feldkirch (AT); Schwarzkopf, Konstantin, 9444 Diepoldsau (CH)
(74) Vertreter: thyssenkrupp Intellectual Property GmbH

(57) **Zusammenfassung**

Die vorliegende Erfindung betrifft eine Lenksäule (1) für ein Kraftfahrzeug, umfassend eine relativ zu einer Manteleinheit (2) um ihre Längsachse (L) drehbar gelagerte Lenkspindel (3), die zur Begrenzung ihrer Rotation mit einem Umdrehungsbegrenzer (6) verbunden ist, der einen mit der Lenkspindel (3) verbundenen Wickelkern (60) aufweist, der in einem mit der Manteleinheit (2) verbundenen Gehäuse (61) angeordnet ist und auf dem ein Bandabschnitt eines langgestreckten, quer zu seiner Längserstreckung flexibel verformbaren Bandelements (7) aufwickelbar ist, welches als geschlossene Bandschlaufe aus einem flachen Band ausgebildet ist, welches einen Bandquerschnitt mit einer Bandbreite und einer relativ dazu kleineren Banddicke aufweist. Um einen verbesserten Endanschlag bereitzustellen, schlägt die Erfindung vor, dass das Bandelement (7) über eine Fixiereinrichtung an dem Gehäuse (61) fixiert ist, die einen Fixierspalt (64) aufweist, in dem ein Bandabschnitt des Bandelements (7) aufgenommen und zugfest gehalten ist.

## Beschreibung

### Stand der Technik

Die Erfindung betrifft eine Lenksäule für ein Kraftfahrzeug, umfassend eine relativ zu einer Manteleinheit um ihre Längsachse drehbar gelagerte Lenkspindel, die zur Begrenzung ihrer Rotation mit einem Umdrehungsbegrenzer verbunden ist, der einen mit der Lenkspindel verbundenen Wickelkern aufweist, der in einem mit der Manteleinheit verbundenen Gehäuse angeordnet ist und auf dem ein Bandabschnitt eines langgestreckten, quer zu seiner Längserstreckung flexibel verformbaren Bandelements aufwickelbar ist, welches als geschlossene Bandschlaufe aus einem flachen Band ausgebildet ist, welches einen Bandquerschnitt mit einer Bandbreite und einer relativ dazu kleineren Banddicke aufweist.

In der Manteleinheit, die ein Lenksäulengehäuse bildet, ist die Lenkspindel drehbar gelagert. Die Manteleinheit wird von einer mit der Fahrzeugkarosserie verbindbaren Trageinheit gehalten, und ist bevorzugt relativ dazu verstellbar. Zur Lenkung des Kraftfahrzeugs wird durch manuelle Drehung des am fahrerseitigen, in Fahrtrichtung hinteren Ende der Lenkspindel angebrachten Lenkrads vom Fahrer ein manueller Lenkbefehl eingegeben, der in einen Lenkeinschlag der lenkbaren Räder des Kraftfahrzeugs umgesetzt wird.

Während bei einem konventionellen Lenksystem die Lenkspindel über ein Lenkgetriebe mechanisch mit den Rädern verbunden ist, wird in einem Steer-by-wire-Lenksystem die Rotation der Lenkspindel mittels eines Drehsensors, der mindestens einen Drehwinkel- und/oder Drehmomentsensor aufweist, erfasst und in ein elektrisches Steuersignal zur Ansteuerung von elektrischen Lenkaktoren umgesetzt, welche einen Lenkeinschlag der lenkbaren Räder erzeugen. Durch die dabei fehlende mechanische Kopplung mit den Rädern wird die Drehung der Lenkspindel nicht durch den mechanischen Endanschlag der Räder bei Erreichen des maximalen Lenkeinschlags begrenzt. Um dennoch ein zu starkes Einlenken zu vermeiden und auch ein realistisches Lenkgefühl zu simulieren, ist es bekannt, den maximal möglichen Drehwinkel des Lenkrads mittels eines Umdrehungsbegrenzers zu beschränken, der eine Begrenzungseinrichtung mit einem Endanschlag zur Begrenzung der maximal möglichen Rotation der Lenkwelle bildet.

Eine Lenksäule mit einem Umdrehungsbegrenzer ist beispielsweise aus der DE 10 2021 201640 A1 bekannt. Dieser umfasst einen auf der Lenkspindel angebrachten Wickelkern, auf dem bei einer Drehung ein flexibles Band eines Bandelements aufgewickelt wird. Das Bandelement ist als geschlossene Bandschlaufe ausgebildet, die in einem Bandabschnitt mit einem Gehäuse verbunden ist, welches fest mit der Manteleinheit verbunden ist. Ist das Band so weit aufgewickelt, dass es zwischen dem Wickelkern und der Fixiereinrichtung gespannt ist, wird der Endanschlag erreicht.

Es ist erforderlich, dass die Fixiereinrichtung eine sichere, zugfeste Fixierung des Bandelements an der Manteleinheit zur Verfügung stellt. Insbesondere soll im Betrieb Schlupf der umlaufenden Bandschlaufe im Endanschlag vermieden werden.

Eine Lenksäule der eingangs genannten Art ist aus der EP 4 238 853 A1 bekannt.

Angesichts der vorangehend erläuterten Problematik ist es eine Aufgabe der vorliegenden Erfindung, einen verbesserten Endanschlag bereitzustellen.

### Darstellung der Erfindung

Diese Aufgabe wird erfindungsgemäß gelöst durch das Lenksystem mit den Merkmalen des Anspruchs 1. Vorteilhafte Weiterbildungen ergeben sich aus den Unteransprüchen.

Bei einer Lenksäule für ein Kraftfahrzeug, umfassend eine relativ zu einer Manteleinheit um ihre Längsachse drehbar gelagerte Lenkspindel, die zur Begrenzung ihrer Rotation mit einem Umdrehungsbegrenzer verbunden ist, der einen mit der Lenkspindel verbundenen Wickelkern aufweist, der in einem mit der Manteleinheit verbundenen Gehäuse angeordnet ist und auf dem ein Bandabschnitt eines langgestreckten, quer zu seiner Längserstreckung flexibel verformbaren Bandelements aufwickelbar ist, welches als geschlossene Bandschlaufe aus einem flachen Band ausgebildet ist, welches einen Bandquerschnitt mit einer Bandbreite und einer relativ dazu kleineren Banddicke aufweist, ist erfindungsgemäß vorgesehen, dass das Bandelement über eine Fixiereinrichtung an dem Gehäuse fixiert ist, die einen Fixierspalt aufweist, in dem ein Bandabschnitt des Bandelements aufgenommen und zugfest gehalten ist.

Die Richtung der Längserstreckung des Bandelements wird im Folgenden gleichbedeutend als Längsrichtung des Bandes bzw. des Bandelements bezeichnet.

Der Fixierspalt weist einen langgestreckt über seine Spaltlänge quer zur Längsachse durchgehenden Spaltverlauf mit einem vorgegebenen Durchgangsquerschnitt quer zur Spaltlänge auf. Ein Bandabschnitt des Bandelements, der auch als Fixierabschnitt bezeichnet werden kann, und einen Teilabschnitt der gesamten Bandlänge bildet, ist mit seiner Längserstreckung dem Spaltverlauf folgend innerhalb der Spaltlänge angeordnet und in dem Durchgangsquerschnitt des Fixierspalts in Längsrichtung zugfest fixiert. Dadurch ist das Bandelement gegen eine in Längsrichtung des Bandes, also in Umlaufrichtung der Bandschlaufe wirkenden Zugbelastung im Endanschlag des Umdrehungsbegrenzers sicher am Gehäuse fixiert.

Der Fixierspalt kann konstruktiv und fertigungstechnisch mit geringem Aufwand realisiert werden, beispielsweise durch den Abstand zwischen zusammengesetzten Teilen des Gehäuses, oder auch durch eine Einformung in einem Gehäuseteil. Dabei können die Spaltlänge, der Durchgangsquerschnitt und der Spaltverlauf einfach an das Bandelement angepasst werden. Dadurch kann einerseits eine optimierte Haltewirkung des darin aufgenommenen Bandabschnitts realisiert werden, und andererseits kann eine ungestörte Verformbarkeit des freien Bandelements bei einer Drehung des Wickelkerns relativ zum Gehäuse bei einer Drehung der Lenkspindel im Lenkbetrieb gewährleistet werden.

Es ist vorteilhaft, dass das Bandelement in dem Fixierspalt reibschlüssig gehalten ist. In dem Fixierspalt kann das Band beispielsweise in Richtung seiner Banddicke eingeklemmt und reibschlüssig eingespannt sein, so dass es kraftschlüssig in Längsrichtung gehalten ist. Dabei kann die quer zur Längserstreckung gemessene Spaltbreite des Fixierspalts abschnittweise oder über die Spaltlänge durchgehend geringfügig geringer sein als die Banddicke, so dass das Band elastisch verspannt bzw. geringfügig zusammengequetscht werden, wodurch die reibschlüssige Haltewirkung erhöht werden kann. Der Reibschluss kann auch dadurch erzeugt werden, dass das Band lose in den Fixierspalt eingelegt ist, und durch die im Endanschlag auftretende Spannung reibschlüssig gegen die Wandungen des Fixierspalt anliegt.

Der Fixierspalt kann abschnittweise elastisch ausgebildet sein, oder federelastische Klem- oder Klammerelemente aufweisen, in denen der Bandabschnitt elastisch eingespannt werden kann.

Es ist bevorzugt, dass der Fixierspalt mit dem Bandelement zusammenwirkende Fixiermittel aufweist. Die Fixiermittel können auf den einander quer zur Spaltlänge gegenüberliegenden Innenseiten angeordnet sein, so dass sie den in den Fixierspalt aufgenommenen Bandabschnitt von außen kontaktieren können. Beispielsweise können die gegen das Band anliegenden Innenseiten des Fixierspalts zum Beispiel Friktionsmittel und/oder Formschlussmittel aufweisen, zwischen denen das Bandelement angeordnet ist, und die dieses kontaktieren.

Friktionsmittel können beispielsweise eine reibungserhöhende Aufrauhung oder reibungserhöhende Beschichtung aufweisen, welche abschnittweise oder durchgehend auf mindestens einer gegen das Bandelement gerichteten Innenseite des Fixierspalts ausgebildet sein kann, um die Haltewirkung des Reibschlusses zwischen dem Fixierspalt und dem Bandelement zu erhöhen. Zusätzlich oder alternativ können die Fixiermittel Formschlussmittel wie beispielsweise vorstehende Zähne, Rändelungen, Spitzen oder dergleichen aufweisen, die ebenfalls den in dem Fixierspalt aufgenommenen Bandabschnitt kontaktieren können und sich dabei von außen elastisch in die Oberfläche des Bands einprägen oder eingraben können, so dass ein lokaler, in Längsrichtung wirksamer Formschluss zwischen den Oberflächen des Bandelements und des Fixierspalts erzeugt wird. Dadurch wird die Festigkeit des Bands nicht beeinträchtigt, und eine vorteilhaft vergrößerte Haltewirkung in Längsrichtung erzeugt.

Eine vorteilhafte Ausführung kann vorsehen, dass der Fixierspalt quer zur Längserstreckung vorstehende Haltevorsprünge aufweist, zwischen denen das Bandelement quer zu seiner Längserstreckung mehrfach umgebogen aufgenommen ist. Es ist eine Mehrzahl von Haltevorsprüngen vorgesehen, die sich in der Spaltrichtung gesehen jeweils über einen Teilabschnitt der Spaltlänge erstrecken. Sie stehen von beiden Seiten des Durchgangsquerschnitts des Fixierspalts gegeneinander vor. Dabei können die Haltevorsprünge der einen Seite quer zur Längserstreckung spielhaltig in die Zwischenräume zwischen den Haltevorsprüngen der anderen, gegenüberliegenden Seite vorragen. Entsprechend erstreckt sich der freie Durchgangsquerschnitt des Fixierspalts nicht einfach in der Spaltrichtung, sondern windet sich zumindest abschnittweise über die Spaltlänge wellenförmig quer zur Längsrichtung hin und her zwischen den einander gegenüberliegenden Haltevorsprüngen hindurch. Der in dem Fixierspalt aufgenommene Bandabschnitt ist dem Durchgangsquerschnitt folgend ebenfalls wellenförmig um die Haltevorsprünge hin und her gewunden. Er ist in dem Fixierspalt mehrfach - abhängig von der Anzahl der Haltevorsprünge - normal zu seiner Längserstreckung und seiner Breite abwechselnd in und entgegen der Normalenrichtung umgebogen, die senkrecht zur Längsrichtung und Breite des Bandes steht. Das quer zu seiner Längserstreckung wellenförmige Bandabschnitt erzeugt mit dem damit korrespondierend wellenförmigen Durchgangsquerschnitt zwischen den von beiden Seiten des Fixierspalts abwechselnd vorspringenden Haltevorsprüngen einen in Richtung der Längserstreckung des Bandelements wirksamen Formschluss. Dieser kann im Endanschlag zwischen dem Bandelement und dem Gehäuse in Richtung der Längserstreckung des Bands wirkende Zugkräfte besonders sicher und schlupffrei aufnehmen.

Eine weitere vorteilhafte Ausführung kann vorsehen, dass der Fixierspalt mindestens ein Längsbewegungshemmelement aufweist, in dem das Bandelement aufgenommen ist. Dieses Hemmelement ist so im Fixierspalt angeordnet, dass der in dem Fixierspalt aufgenommene Bandabschnitt das Hemmelement umschlingt und dabei durch die Umschlingung entweder ein Formschluss oder ein sich mit Erhöhung der Bandzugkraft selbstverstärkender Reibschluss zwischen Band und Längsbewegungshemmelement entsteht. Dadurch können im Endanschlag zwischen dem Bandelement und dem Gehäuse in Richtung der Längserstreckung des Bands wirkende Zugkräfte ebenfalls besonders sicher und schlupffrei aufgenommen werden.

Es ist möglich, dass das Gehäuse trommelförmig ist. Das Gehäuse kann bevorzugt hohlzylindrisch ausgebildet sein, und eine koaxial umlaufende Außenwand und mindestens eine, bevorzugt zwei Stirnwände aufweisen, zwischen denen der Wickelkern, das Bandelement und die Fixiereinrichtung angeordnet ist. Dadurch wird eine kompakte und funktional günstige Bauform ermöglicht.

Es kann vorgesehen sein, dass der Fixierspalt zwischen einem Innenteil und einem Außenteil des Gehäuses ausgebildet ist. Das Außenteil kann vorzugsweise durch eine Außenwand des Gehäuses gebildet sein, beispielsweise durch einen Wandungsabschnitt eines rohrförmigen oder hohlzylindrischen Gehäuseteils. Das Innenteil kann beispielsweise bezüglich der Längsachse um die Spaltbreite radial beabstandet innerhalb des von dem Außenteil koaxial umschlossenen Innenraum des Gehäuses angeordnet sein. Der Fixierspalt wird dann durch die Innenseite des Außenteils und die Außenseite des Innenteils begrenzt. Die Spaltbreite entspricht dem Abstand zwischen Innenteil und Außenteil.

Es ist alternativ ebenfalls möglich, dass das Außenteil und das Innenteil an einer axialen Stirnwand angebracht sind, beispielsweise als davon axial abstehende Vorsprünge.

Der Fixierspalt kann sich zumindest abschnittweise in Umfangsrichtung erstrecken. Dabei kann sich der Fixierspalt über seine Spaltlänge bogenförmig erstrecken, bevorzugt in Umfangsrichtung eines um koaxial zur Längsachse verlaufenden Kreisbogenabschnitts. Der Fixierspalt kann radial nach außen durch eine Innenseite eines hohlzylindrischen, rohrförmigen Außenteils begrenzt sein. Innerhalb des Außenteils kann ein bevorzugt bogenförmiges Innenteil vorgesehen sein, welches sich über einen Umfangsteilabschnitt erstreckt und mit seiner Außenseite die Spaltbreite radial nach innen begrenzt. Diese Anordnung hat den Vorteil, dass radial zwischen dem Innenteil und dem Wickelkern genügend Raum bereitgestellt werden kann, in dem die bei der relativen Drehung zwischen den Endanschlägen vom Wickelkern auf- und abgewickelten freien Bandabschnitte sicher aufgenommen werden können.

Es ist vorteilhaft, dass die Lenksäule als Steer-by-Wire-Lenksäule ausgebildet ist. Dabei ist es bevorzugt, dass die Lenkspindel von einem Feedback-Aktuator drehend antreibbar ist.

Bei einer Steer-by-Wire-Lenksäule werden manuelle Lenkbefehle des Fahrers wie bei konventionellen mechanischen Lenkungen durch Drehung eines an der der Lenkspindel angebracht Lenkrades eingegeben. Die Lenkspindel ist jedoch nicht mechanisch über das Lenkgetriebe mit den zu lenkenden Rädern verbunden, sondern wirkt mit Drehwinkel- bzw. Drehmomentsensoren zusammen, die den eingebrachten Lenkbefehl erfassen und daraus ein elektrisches Steuersignal erzeugen und an einen Lenksteller abgeben, der mittels eines elektrischen Stellantriebs einen dem Lenkbefehl entsprechenden Lenkeinschlag der Räder einstellt. Durch die fehlende mechanische Kopplung erhält der Fahrer bei Steer-by-Wire-Systemen von den gelenkten Rädern keine unmittelbare physische Rückmeldung über den Lenkstrang, welche bei konventionellen mechanisch gekoppelten Lenkungen als Reaktions- bzw. Rückstellmoment in Abhängigkeit von der Fahrbahnbeschaffenheit, der Fahrzeuggeschwindigkeit, dem aktuellen Lenkwinkel und weiterer Betriebszustände auf das Lenkrad zurück übertragen wird. Es ist bekannt, die fehlende haptische Rückmeldung mittels eines elektro-motorischen Feedback-Aktuators zu simulieren, der in die Lenksäule des Fahrzeugs integriert sein kann. Er weist eine Antriebseinheit auf, die abhängig vom Rückkopplungs-Signal mittels eines elektrischen Motors ein dem realen Reaktionsmoment entsprechendes Rückstellmoment oder Feedbackmoment erzeugt und in die Lenkspindel einkoppelt. Derartige "Force-feedback"-Systeme geben dem Fahrer den Eindruck einer realen Fahrsituation wie bei einer konventionellen Lenkung, was eine intuitive Reaktion erleichtert.

In Steer-by-Wire-Lenksäulen ist die Integration eines erfindungsgemäß kompakten und betriebssicheren Umdrehungsbegrenzers besonders vorteilhaft.

Eine vorteilhafte Weiterbildung kann dadurch realisiert sein, dass das Gehäuse koaxial innerhalb eines Getrieberads angeordnet ist. Bei einem Feedback-Aktuator der vorgenannten Art ist zur Drehmomentübertragung und Drehzahlanpassung zwischen dem elektrischen Motor und der Lenkwelle ein Getriebe angeordnet, beispielsweise ein Riementrieb. Dieses umfasst ein drehfest mit der Lenkspindel verbundenes Getrieberad, beispielsweise ein Riemenrad, welches getriebemäßig mit dem elektrischen Motor gekuppelt ist. Für eine kompakte Bauform ist es nun vorteilhaft, das Getrieberad hohl und einseitig stirnseitig offen auszuführen und den erfindungsgemäßen Umdrehungsbegrenzer in den Hohlraum des auf der Lenkspindel drehfest angebrachten Getrieberads zu integrieren. Dies kann mit geringem Aufwand dadurch erfolgen, dass das drehfest mit der Manteleinheit verbundene Gehäuse eines erfindungsgemäßen Umdrehungsbegrenzers durch die offene Seite des Getrieberads in dasselbe hineinragt und dessen Hohlraum so mindestens teilweise ausfüllt (jedoch ohne eine drehfeste Verbindung zum Getrieberad). So kann in vorteilhafter Weise Bauraum gespart und damit das System besonders kompakt gebaut werden..

Bei der letztgenannten Ausführung ist das Gehäuse wie beschrieben drehfest mit der Manteleinheit verbunden, sodass der Endanschlag auch in dieser Bauform über die Lenksäule an der Fahrzeug-Karosserie abgestützt ist.

Es ist möglich, dass das Gehäuse ein Kunststoffteil aufweist. Das Kunststoffteil kann bevorzugt aus einem thermoplastischen Polymer als Spritzgussteil ausgebildet sein. Dies hat den Vorteil, dass mechanische Funktionselemente mit geringem Aufwand einstückig integriert werden können, insbesondere der erfindungsgemäße Fixierspalt, auch zusammen mit den vorgenannten Fixiermitteln, Haltevorsprüngen und dergleichen.

Alternativ kann das Gehäuse ein Metallteil aufweisen, beispielsweise ein Druckgussteil.

Es kann vorgesehen sein, dass das Gehäuse ein Formteil aufweist, an dem der Fixierspalt einstückig ausgebildet ist. Die einstückige Bausweise des Gehäuses, beispielsweise als Kunststoff-Spritzgussteil oder Metall-Spritzgussteil, ermöglicht eine rationelle Fertigung und Montage des Umdrehungsbegrenzers, beispielsweise an der Manteleinheit der Lenksäule und/oder einem Feedback-Aktuator.

Die Manteleinheit der Lenksäule ist in an sich bekannter Weise von einer Trageinheit gehalten, die ihrerseits mit der Fahrzeugkarosserie verbindbar ist. Die Manteleinheit kann zur Verstellung der Lenkradposition längsverstellbar ausgestaltet sein, beispielsweise durch teleskopartig angeordnete Mantelrohre. Zur Höhenverstellung kann die Manteleinheit relativ zur Trageinheit quer zur Längsachse nach oben und unten verstellbar sein.

### Beschreibung der Zeichnungen

Vorteilhafte Ausführungsformen der Erfindung werden im Folgenden anhand der Zeichnungen näher erläutert. Im Einzelnen zeigen:
- Fig. 1: eine erfindungsgemäße Lenksäule in einer schematischen perspektivischen Ansicht,
- Fig. 2: die Lenksäule gemäß Figur 1 in Seitenansicht,
- Fig. 3: einen Querschnitt A-A gemäß Fig.2,
- Fig. 4: eine vergrößerte Detailansicht aus Fig.3
- Fig. 5: das Gehäuse des erfindungsgemäßen Umdrehungsbegrenzers gemäß Fig.1-4 in einer perspektivischen Darstellung,
- Fig. 6: eine axiale Draufsicht auf das Gehäuse (Schnittdarstellung) gemäß Fig.5.
- Fig. 7: eine zweite Ausführungsform in einer vergrößerten Detailansicht analog zu Fig.6,
- Fig. 8: eine dritte Ausführungsform in einer vergrößerten Detailansicht wie in Fig.7.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

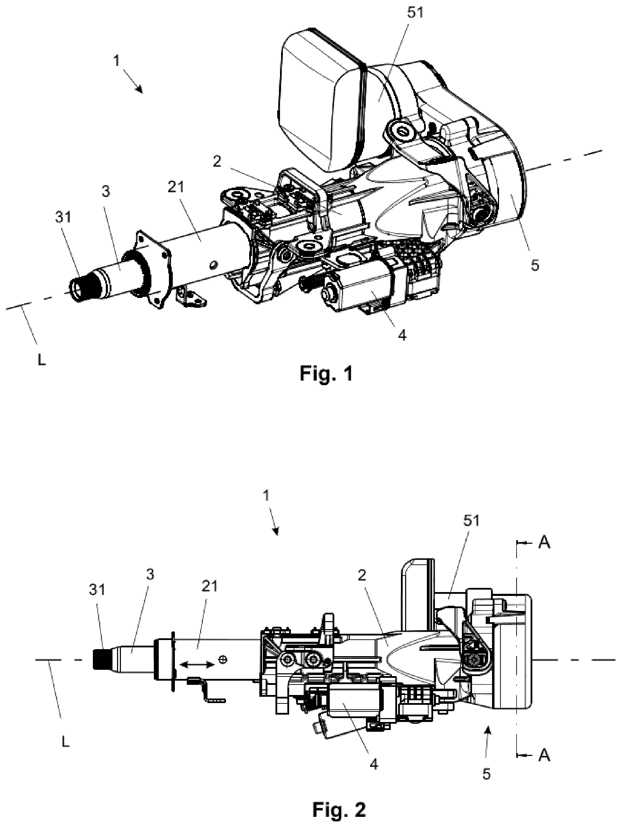

Fig.1 und 2 zeigen eine als Steer-by-Wire-Lenksäule ausgebildete erfindungsgemäße Lenksäule 1 als Ganzes in einer perspektivischen Ansicht und einer seitlichen Ansicht.

Die Lenksäule 1 umfasst eine Manteleinheit 2, die einen Innenmantel 21 aufweist, in dem eine Lenkspindel 3 um ihre Längsachse L drehbar gelagert ist. Die Lenkspindel 3 weist an ihrem bezüglich der Fahrtrichtung hinteren, der Fahrerposition zugewandten Ende einen Befestigungsabschnitt 31 auf, an dem ein hier nicht dargestelltes Lenkrad zur Eingabe manueller Lenkbefehle anbringbar ist.

Der Innenmantel 21 ist samt der Lenkspindel 3 in der Manteleinheit 2 teleskopartig in Richtung der Längsachse L längsverstellbar aufgenommen, wie mit dem Doppelpfeil angedeutet ist. Zur Längsverstellung ist ein motorischer Verstellantrieb 4 zwischen der Manteleinheit 2 und dem Innenmantel 21 angeordnet.

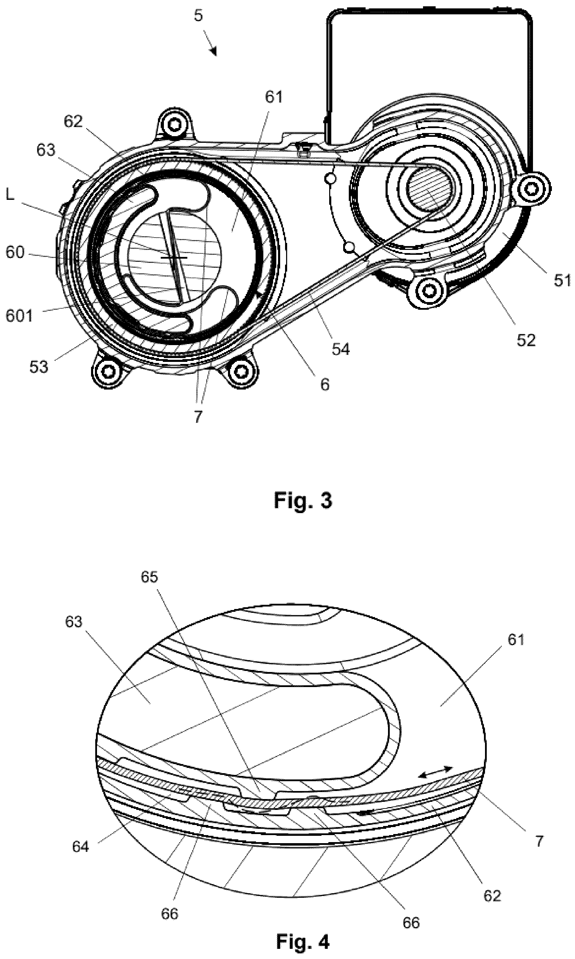

An der Manteleinheit 2 ist ein elektromotorischer Feedback-Aktuator 5 angebracht, der in einem Querschnitt A-A in Fig.3 gezeigt ist.

Der Feedback-Aktuator 5 weist einen elektrischen Motor 51 auf, der über ein Riemengetriebe an die Lenkspindel 3 angekoppelt ist. Dieses umfasst ein auf der Motorwelle angebrachtes Riemenrad 52, ein mit der Lenkspindel 3 drehfest verbundenes, hohl und einseitig stirnseitig offen ausgeführtes Riemenrad 53 und einen um die Riemenräder 52 und 53 umlaufenden Riemen 54, bevorzugt einen Zahnriemen, auf.

Ein erfindungsgemäßer Umdrehungsbegrenzer 6 ist im Hohlraum des Riemenrads 53 angeordnet und begrenzt die mögliche Drehung der Lenkspindel 3 um die Längsachse L relativ zur Manteleinheit 2.

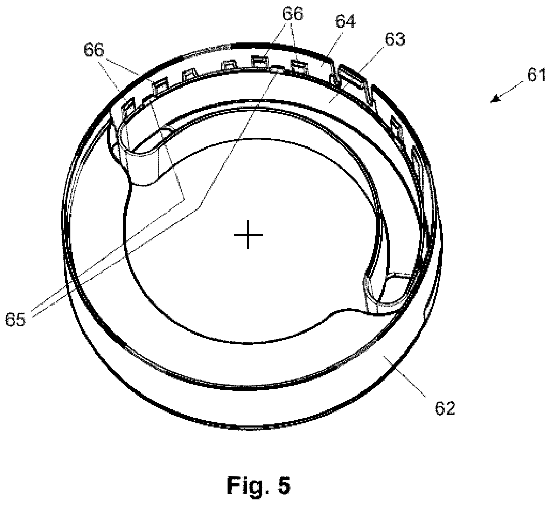

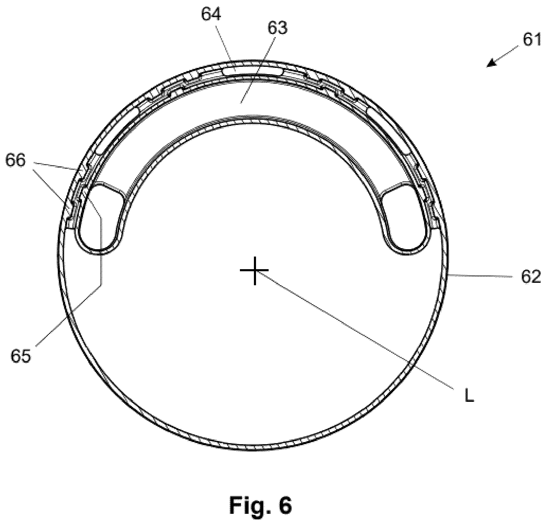

Der Umdrehungsbegrenzer 6 weist ein Gehäuse 61 auf, welches separat freigestellt in Fig.5 und 6 gezeigt ist. Es kann bevorzugt einstückig ausgebildet sein, beispielsweise als Kunststoff-Spritzgussteil oder als Metall-Druckgussteil.

Das Gehäuse 61 ist trommelförmig ausgebildet und weist eine rohrabschnittförmige, hohlzylindrische Außenwand 62 auf, die ein Außenteil im Sinne der Erfindung bildet und die in eingebautem Zustand koaxial zur Längsachse L umläuft. Weiter weist es ein Innenteil 63 auf, welches als Abschnitt eines Kreisbogens geformt ist, und sich über einen Winkelabschnitt von weniger als 180° koaxial um die Längsachse L erstreckt.

Das Gehäuse 61 ist koaxial zur Längsachse L angeordnet und ist drehfest an der Manteleinheit 2 fixiert, von wo es über dessen offene Stirnseite in den Hohlraum des Riemenrads 53 ragt.

Zwischen der radialen Außenseite des Innenteils 63 und der dieser radial gegenüberliegenden Innenseite der Außenwand 62 ist ein kreisbogenförmiger Fixierspalt 64 ausgebildet.

Mit der Lenkspindel 3 ist ein zylindrischer Wickelkern 60 drehfest verbunden, der koaxial in dem Gehäuse 61 angeordnet ist. Ein Bandelement 7, welches in Form einer endlosen, geschlossenen Bandschlaufe aus einem flachen flexiblen Band ausgebildet ist, ist durch einen Querschlitz 601 des Wickelkerns 60 quer zur Längsachse L hindurchgeführt und damit drehfest festgelegt. Bei einer Drehung der Lenkspindel 3 wird das Bandelement 7 auf dem Wickelkern 60 aufgewickelt. An dem Gehäuse 61 ist das Bandelement 7 in dem Fixierspalt 64 fixiert. Durch Drehung der Lenkspindel 3 kann das Bandelement 7 aufgewickelt werden, bis nach einer vorgegebenen Zahl von Umdrehungen der verbleibende freie Abschnitt des Bandelements 7 straff zwischen dem Wickelkern 60 und dem Eintritt in den Fixierspalt 64 gespannt ist.

Erfindungsgemäß weist das Innenteil 63 von seiner Außenseite radial nach außen in den Fixierspalt 64 vorstehende Haltevorsprünge 65 auf. Die Außenwand 62 weist von ihrer Innenseite radial nach innen in den Fixierspalt 64 vorstehende Haltevorsprünge 66 auf, wie in Fig. 4, 5 und 6 erkennbar ist. Die Haltevorsprünge 65 und 66 stehen somit von beiden Seiten des Durchgangsquerschnitts des Fixierspalts 64 gegeneinander vor. Sie sind derart in Umfangsrichtung versetzt angeordnet, dass ein Haltevorsprung 65 jeweils radial in die in Umfangsrichtung gebildete Lücke zwischen zwei gegenüberliegenden Haltevorsprüngen 66 vorragt.

Das Bandelement 7 ist mit einem Bandabschnitt in dem Fixierspalt 64 eingesetzt, wobei die Längserstreckung des Bandes dem Verlauf des Fixierspalts 64 folgt. Dabei wird das Bandelement 7 von dem Haltevorsprung 65 zwischen den radial nach innen entgegenstehenden Haltevorsprüngen 66 radial nach außen gebogen, so dass ein wellenförmig gewundener Verlauf erzeugt wird, der in Fig.4 mit der gestrichelten Wellenlinie zur Verdeutlichung mit übertriebener Wellenhöhe angedeutet ist. Dadurch wird ein in der Längsrichtung des Bandelements, die in Fig.4 mit dem Doppelpfeil angedeutet ist, wirkender Formschluss und/oder (selbsthemmenden) Reibschluss zwischen dem Gehäuse 61 und dem Bandelement 7 realisiert. Dadurch ist das Bandelement 7 gegen Zugbelastungen an dem Gehäuse 61 des Umdrehungsbegrenzers 6 und somit an der Manteleinheit 2 fixiert und gesichert.

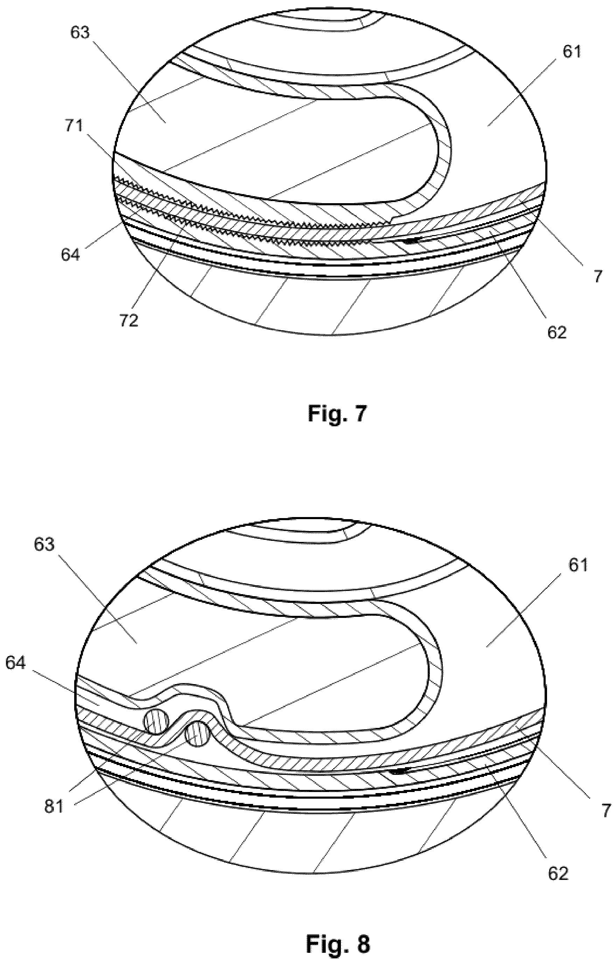

Die Fig. 7 zeigt eine alternative Ausführungsform der Erfindung. Hier weist die Außenseite des Innenteils 63 und/oder die Innenseite der Aussenwand 62 anstelle von Haltevorsprüngen Friktions- und/oder Formschlussmittel 71, 72 in Form einer reibungserhöhenden Aufrauhung und/oder Beschichtung auf. Anstelle einer Aufrauhung oder Beschichtung kann auch ein dünnwandiges Zusatzteil mit einem entsprechend erhöhten Reibkoeffizienten oder einer rauhen Oberflächenstruktur (z.B. mit Borsten, Schuppen, Zähnen, Widerhaken etc.) zum Einsatz kommen, das auf die Wandung aufgebracht wird (z.B. Klebefolie, Blechstreifen, Aufklipsteile u.ä.) oder diese partiell auch ersetzen kann (z.B. Einlege- oder Einsatzteile). Die Friktions- und/oder Formschlussmittel können sich über den gesamten Fixierspalt 64 erstrecken oder nur partiell an bestimmten Positionen im Fixierspalt 64 vorhanden sein. Durch die somit erhöhte Wandreibung wird ein in der Längsrichtung des Bandelements, die in Fig.4 mit dem Doppelpfeil angedeutet ist, wirkender Reibschluss zwischen dem Gehäuse 61 und dem Bandelement 7 realisiert. Dadurch ist das Bandelement 7 analog zu der oben beschriebenen ersten Ausführungsform wiederum gegen Zugbelastungen an dem Gehäuse 61 des Umdrehungsbegrenzers 6 und somit der Manteleinheit 2 fixiert und gesichert.

Die Fig. 8 zeigt eine weitere alternative Ausführungsform der Erfindung. Hier befindet sich im Fixierspalt 64 ein zusätzliches Längsbewegungshemmelement 81, durch das sich das Bandelement 7 wellenförmig schlingt. Das Hemmelement 81 weist eine schnallenähnliche Form auf und kann zum Beispiel durch zwei (oder auch mehr) im Gehäuse 61 fixierte, quer zur Längsausrichtung des Bandes orientierte und in etwa der Banddicke entsprechend voneinander beabstandete Stifte realisiert werden. Dadurch wird dem Bandelement 7 ähnlich wie bei der oben beschriebenen ersten Ausführungsform ein hin und her gewundener Verlauf aufgezwungen, der dann wiederum analog zu der beschriebenen ersten Ausführungsform zu einem Form- und/oder (selbsthemmenden) Reibschluss führt und das Bandelement 7 analog zu der ersten Ausführungsform gegen Zugbelastungen an dem Gehäuse 61 des Umdrehungsbegrenzers 6 und somit der Manteleinheit 2 fixiert und sichert.

In einer alternativen (in den Figuren nicht gezeigten) Variante kann das Längsbewegungshemmelement 81 auch nur aus einem einzelnen Stift bestehen, wobei das Bandelement 7 dann mittels einer durch Vernähen des Bandes erzeugten und den Stift vollends umschlingenden Bandschlaufe am Längsbewegungshemmelement 81 fixiert wird. Dadurch wird wiederum ein in der Längsrichtung des Bandelements, die in Fig.4 mit dem Doppelpfeil angedeutet ist, wirkender Formschluss zwischen dem Gehäuse 61 und dem Bandelement 7 realisiert und das Bandelement 7 gegen Zugbelastungen an dem Gehäuse 61 des Umdrehungsbegrenzers 6 und somit an der Manteleinheit 2 fixiert und gesichert.

### Bezugszeichenliste

- 1: Lenksäule
- 2: Manteleinheit
- 21: Innenmantel
- 3: Lenkspindel
- 31: Befestigungsabschnitt
- 4: Verstellantrieb
- 5: Feedback-Aktuator
- 51: Motor
- 52: Riemenrad
- 53: Riemenrad, Getrieberad
- 54: Riemen
- 6: Umdrehungsbegrenzer
- 60: Wickelkern
- 601: Querschlitz
- 61: Gehäuse
- 62: Außenwand
- 63: Innenteil
- 64: Fixierspalt
- 65: Haltevorsprung
- 66: Haltevorsprung
- 7: Bandelement
- 71, 72: Friktions- und/oder Formschlussmittel
- 81: Längsbewegungshemmelement
- L: Längsachse

## Patentansprüche

1. Lenksäule (1) für ein Kraftfahrzeug, umfassend eine relativ zu einer Manteleinheit (2) um ihre Längsachse (L) drehbar gelagerte Lenkspindel (3), die zur Begrenzung ihrer Rotation mit einem Umdrehungsbegrenzer (6) verbunden ist, der einen mit der Lenkspindel (3) verbundenen Wickelkern (60) aufweist, der in einem mit der Manteleinheit (2) verbundenen Gehäuse (61) angeordnet ist und auf dem ein Bandabschnitt eines langgestreckten, quer zu seiner Längserstreckung flexibel verformbaren Bandelements (7) aufwickelbar ist, welches als geschlossene Bandschlaufe aus einem flachen Band ausgebildet ist, welches einen Bandquerschnitt mit einer Bandbreite und einer relativ dazu kleineren Banddicke aufweist,
**dadurch gekennzeichnet,**
**dass** das Bandelement (7) über eine Fixiereinrichtung an dem Gehäuse (61) fixiert ist, die einen Fixierspalt (64) aufweist, in dem ein Bandabschnitt des Bandelements (7) aufgenommen und zugfest gehalten ist.

2. Lenksäule nach Anspruch 1, **dadurch gekennzeichnet, dass** das Bandelement (7) in dem Fixierspalt (64) reibschlüssig gehalten ist.

3. Lenksäule nach einem der vorangehenden Ansprüche, **dadurch gekennzeichnet, dass** der Fixierspalt (64) mit dem Bandelement (7) zusammenwirkende Fixiermittel aufweist.

4. Lenksäule nach einem der vorangehenden Ansprüche, **dadurch gekennzeichnet, dass** der Fixierspalt (64) quer zur Längserstreckung vorstehende Haltevorsprünge (65, 66) aufweist, zwischen denen das Bandelement (7) quer zu seiner Längserstreckung mehrfach umgebogen aufgenommen ist.

5. Lenksäule nach einem der vorangehenden Ansprüche, **dadurch gekennzeichnet, dass** der Fixierspalt (64) mindestens ein Längsbewegungshemmelement (81) aufweist, in dem das Bandelement (7) aufgenommen ist.

6. Lenksäule nach einem der vorangehenden Ansprüche, **dadurch gekennzeichnet, dass** das Gehäuse (61) trommelförmig ist.

7. Lenksäule nach einem der vorangehenden Ansprüche, **dadurch gekennzeichnet, dass** der Fixierspalt (64) zwischen einem Innenteil (63) und einem Außenteil (62) des Gehäuses (61) ausgebildet ist.

8. Lenksäule nach einem der vorangehenden Ansprüche, **dadurch gekennzeichnet, dass** der Fixierspalt (64) sich zumindest abschnittweise in Umfangsrichtung erstreckt.

9. Lenksäule nach einem der vorangehenden Ansprüche, **dadurch gekennzeichnet, dass** sie als Steer-by-Wire-Lenksäule ausgebildet ist.

10. Lenksäule nach einem der vorangehenden Ansprüche, **dadurch gekennzeichnet, dass** die Lenkspindel (3) von einem Feedback-Aktuator (5) drehend antreibbar ist.

11. Lenksäule nach einem der vorangehenden Ansprüche, **dadurch gekennzeichnet, dass** das Gehäuse (61) koaxial innerhalb eines Getrieberads (53) angeordnet ist.

12. Lenksäule nach einem der vorangehenden Ansprüche, **dadurch gekennzeichnet, dass** das Gehäuse (61) ein Kunststoffteil aufweist.

13. Lenksäule nach einem der vorangehenden Ansprüche, **dadurch gekennzeichnet, dass** das Gehäuse (61) ein Formteil aufweist, an dem der Fixierspalt (64) einstückig ausgebildet ist.
